(19) Europäisches Patentamt / European Patent Office / Office européen des brevets

(11) **EP 4 174 005 A1**

(12) **EUROPEAN PATENT APPLICATION**

(43) Date of publication:
**03.05.2023 Bulletin 2023/18**

(21) Application number: **22203920.8**

(22) Date of filing: **26.10.2022**

(51) International Patent Classification (IPC):
**B65H 51/20** $^{(2006.01)}$

(52) Cooperative Patent Classification (CPC):
**B65H 51/20;** B65H 2701/32

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.10.2021 US 202163273265 P**

(71) Applicant: **Corning Research & Development Corporation**
**Corning, New York 14831 (US)**

(72) Inventors:
• **BLACKBURN, James Daniel**
  **Conover, 28613 (US)**
• **TOVEY, Cameron John**
  **Conover, 28613 (US)**
• **YATES, Wesley Allan**
  **Granite Falls, 28630 (US)**

(74) Representative: **Sadler, Peter Frederick**
**Reddie & Grose LLP**
**The White Chapel Building**
**10 Whitechapel High Street**
**London E1 8QS (GB)**

(54) **ACCUMULATOR FOR MANUFACTURING FIBER OPTIC CABLES, MANUFACTURING SYSTEM HAVING SUCH AN ACCUMULATOR, AND RELATED METHODS**

(57) An accumulator for making fiber optic cables includes a frame, a first pulley array mounted to the frame and having a first plurality of pulleys, and a second pulley array mounted to the frame and having a second plurality of pulleys. The first pulley array and the second pulley array are movable relative to each other so as to be positionable on opposite sides of each other. A manufacturing system including an unwinder, a winder, and the accumulator is disclosed. A method of threading the accumulator is disclosed that advantageously uses the relative movement of the first and second pulley arrays across each other to simplify threading. A method of making fiber optic cables where the unwinder operates with more than one accumulator is also disclosed.

**FIG. 5**

## Description

### Priority Application

This application claims the benefit of priority of U.S. Provisional Application No. 63/273,265, filed on October 29, 2021, the content of which is relied upon and incorporated herein by reference in its entirety.

### Technical Field

This disclosure relates generally to the manufacture of fiber optic cables, and more particularly to, an accumulator used in the manufacture of fiber optic cables, to a manufacturing system having such an accumulator, and to a method of making a fiber optic cable using the manufacturing system.

### Background

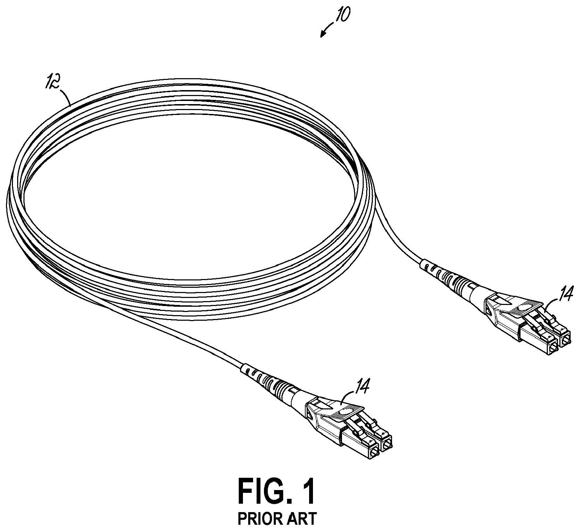

Optical fibers are useful in a wide variety of applications, including the telecommunications industry for voice, video, and data transmissions. Benefits of optical fibers include wide bandwidth and low noise operation. In a telecommunication system that uses optical fibers, there are typically many locations where fiber optic cables carrying the optical fibers are connected to equipment or other fiber optic cables. Jumper fiber optic cables are often provided by manufacturers to provide such connections. Jumper fiber optic cables include a length of cable carrying one or more optical fibers that are terminated by one or more connectors at each end of the cable. By way of example, the fiber optic cable may be several meters in length (e.g., 20 meters (m) or 30 m) and include simplex or duplex LC, SC or other types of connectors at each end. Fig. 1 illustrates an exemplary jumper fiber optic cable 10 having a coiled length of fiber optic cable 12 carrying one or more optical fibers (not shown) that are terminated by connectors 14 at both ends thereof.

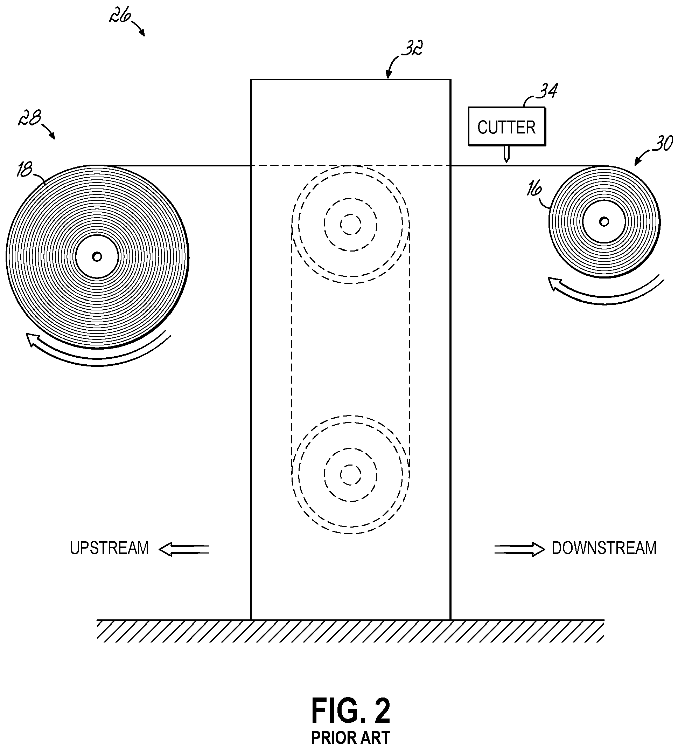

In reference to Figs. 2-4, to make the jumper fiber optic cable 10, manufacturers may, in a first processing step, form a plurality of individual fiber optic coils 16 from a bulk supply of fiber optic cable 18. The fiber optic coils 16 are each provided at a length corresponding to the desired length of the jumper fiber optic cable 10. The bulk supply of fiber optic cable 18 may be provided in a large spool of fiber optic cable that has a length many times greater than the length of the jumper fiber optic cable 10. Each fiber optic coil 16 is arranged in a generally circular loop and includes a first end 20, a second end 22, and an intermediate cable portion 24 extending between the first and second ends 20, 22. For the fiber optic coils 16, the first and second ends 20, 22 have not yet been terminated with connectors 14.

Fig. 2 illustrates an exemplary manufacturing system 26, which may represent a station of a larger assembly line of a manufacturing facility, for manufacturing the plurality of coils 16 from the bulk supply of fiber optic cable 18. The manufacturing system 26 generally includes an unwinder 28, a winder 30, and an accumulator 32 disposed between the unwinder 28 and winder 30. The unwinder 28 holds, for example, the spool of fiber optic cable 18 and allows fiber optic cable to be paid out toward the winder 30 through rotation of the unwinder 28. The winder 30, in turn, reels in fiber optic cable from the unwinder 28 and forms a coil 16 through rotation of the winder 30. When the desired length of fiber optic cable has been wound in the coil 16, the winder 30 is stopped and the fiber optic cable is cut or severed from the spool of cable 18 by a cutter 34. The coil 16 is then removed from the winder 30, the cut end of the fiber optic cable is reattached to the winder 30, and the winder 30 is restarted to form the next coil 16. Such unwinders 28 and winders 30 are generally known in the fiber optic industry and, for sake of brevity, will not be described in further detail here.

In operation, it can be difficult or undesirable to match the speed of the unwinder 28 with the winder 30. For example, it may be desirable to operate the unwinder 28 at a relatively constant speed, while the winder 30 operates in an intermittent manner (e.g., to allow the fiber optic cable to be cut, to remove a coil 16 from the winder 30, and to reattach the fiber optic cable to the winder 30). For this reason, the accumulator 32 may be generally disposed between the unwinder 28 and winder 30 and be configured to accommodate the mismatch in operation/speeds between the unwinder 28 and winder 30. In this regard, when the winder 30 is stopped, the unwinder 28 may continue to operate and the fiber optic cable being paid out from the unwinder 28 is temporarily stored in the accumulator 32. When the winder 30 is restarted, the stored fiber optic cable in the accumulator 32 is then directed to the winder 30 for forming the next coil 16.

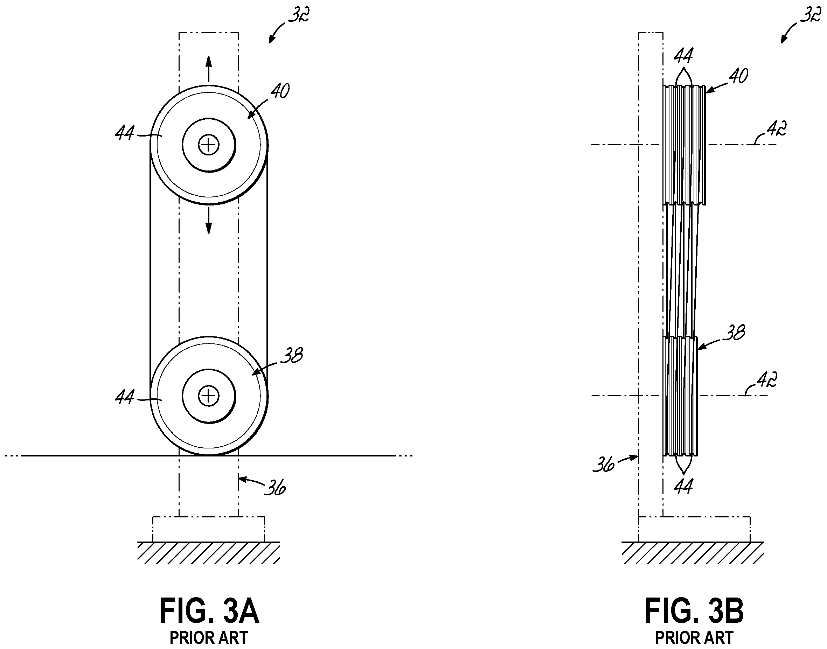

As illustrated in Figs. 3A and 3B, current design for accumulators 32 typically includes a frame 36 having a pulley arrangement that provides for the storage of fiber optic cable in the accumulator 32. In this regard, the accumulator 32 typically includes a first sheave 38 fixed to the frame 36 and a second sheave 40 movable relative to the first sheave 38 (e.g., such as in a vertical direction) to increase or decrease the separation distance between the first and second sheaves 38, 40. Each sheave 38, 40 defines a rotational axis 42 along which a plurality of pulleys 44 are arranged in series such that each pulley 44 rotates about the common rotational axis 42. The fiber optic cable from the spool 18 is threaded through the plurality of pulleys 44 of both sheaves 38, 40 in a known manner. When the unwinder 28 and winder 30 are mismatched in operation such that the accumulator 32 is configured to increase in the amount of fiber optic cable stored in the accumulator 32, the movable sheave 40 moves away from the fixed sheave 38 and the amount of fiber optic cable extending between the two sheaves 38, 40 is increased. When the unwinder 28 and winder 30 are mismatched in operation and the accumulator 32 is configured to decrease in the amount of fiber optic cable stored in the accumulator 32, the movable sheave 40 moves toward the fixed sheave 38 such that the amount of fiber optic cable extending between the two sheaves 38, 40 is decreased.

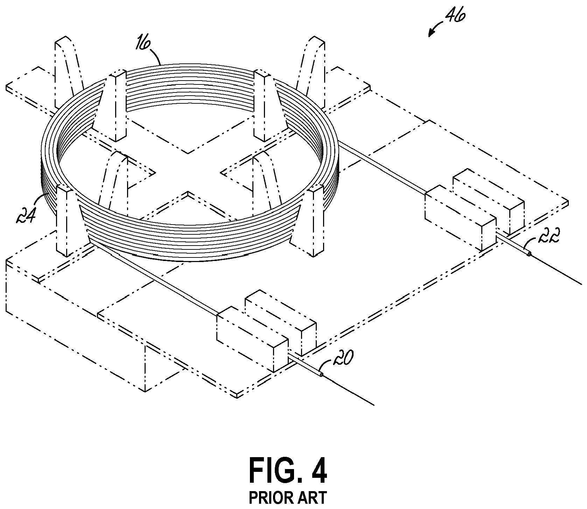

In a next processing step for forming the fiber optic jumper 10, and as illustrated in Fig. 4, in another station of the assembly line at the manufacturing facility, a plurality of coils 16 (one shown) made in the manufacturing system 26 described above may be fed to a connectorizer apparatus 46 for terminating the first and second ends 20, 22 of the fiber optic cable with connectors 14, as shown in Fig. 1. Such connectorizer apparatuses 46 are known in the fiber optic industry and will not be described further herein. The coils 16 may be configured such that the first and second ends 20, 22 are on the same side of the coil 16 so as to be in a predetermined location for placement in the apparatus 46.

While the manufacturing system 26 described above for forming the coils 16 is generally successful for its intended purpose, the process does have some drawbacks that manufacturers continually strive to improve upon. In this regard, for the accumulator 32 in the manufacturing system 26, it can be difficult to thread the fiber optic cable through the plurality of pulleys 44 in both of the sheaves 38, 40. This process is typically done manually and is time consuming. For this reason, the manufacturing system 26 is operated in a manner so as to avoid having to rethread the fiber optic cable through the accumulator 32 (e.g., after an initial threading). This, however, has a number of consequences. For example, to avoid rethreading the fiber optic cable through the accumulator 32, all cuts to the fiber optic cable, such as when switching between successive coils 16, have to be made on the downstream side of the accumulator 32. As used herein, "downstream" means locations along the fiber optic cable that have already passed through the plurality of pulleys 44 in the accumulator 32 (e.g., at locations between the accumulator 32 and the winder 30). Moreover, when a spool of fiber optic cable 18 is nearing its end, to avoid rethreading the accumulator 32, the end of the fiber optic cable in the spool 18 is spliced to the end of the fiber optic cable in a new spool 18 such that the fiber optic cable in the new spool is automatically threaded through the pulleys 44 of the accumulator 32. The length of fiber optic cable including the splice is monitored and removed so as not to form part of a coil 16.

Furthermore, by requiring cuts to the fiber optic cable only on the downstream side of the accumulator 32, options for improving the operation of the manufacturing system 26 may be limited. In this regard, for example, the inability of locate cuts in the fiber optic cable upstream of the accumulator 32 means that the unwinder 28 and the accumulator 30 are operationally tied together at all times during use of the manufacturing system 26. As used herein, "upstream" means locations along the fiber optic cable that have not yet passed through the pulleys 44 in the accumulator 32 (e.g., at locations between the unwinder 28 and the accumulator 32). Such a requirement limits manufacturer's ability to provide a variety of different unwinder 28, winder 30 and accumulator 32 configurations that may make improvements to the overall manufacturing process.

**Summary**

An accumulator for making fiber optic cables is disclosed. In one aspect, the accumulator includes a frame, a first pulley array mounted to the frame and including a first frame member and a first plurality of pulleys rotatably mounted to the first frame member along a first distribution axis, wherein each of the first plurality of pulleys defines a first rotational axis, and a second pulley array mounted to the frame and including a second frame member and a second plurality of pulleys rotatably mounted to the second frame member along a second distribution axis, wherein each of the second plurality of pulleys defines a second rotational axis. The first pulley array and the second pulley array are movable relative to each other so as to be positionable on opposite sides of each other.

In one embodiment, the first distribution axis and the first rotational axis of each of the first plurality of pulleys may be substantially perpendicular to each other. In a similar manner, and in one embodiment, the second distribution axis and the second rotational axis of each of the second plurality of pulleys may be substantially perpendicular to each other. In one embodiment, the first plurality of pulleys on the first pulley array and the second plurality of pulleys on the second pulley array may lie substantially within a common plane. For example, the common plane in which the first plurality of pulleys and the second plurality of pulleys substantially lie may be a substantially vertical plane. The relative movement of the first pulley array and the second pulley array may be such that the first plurality of pulleys and the second plurality of pulleys always remain within the common plane.

In one embodiment, the first plurality of pulleys may be mounted to the first frame member in spaced relation along the first distribution axis to define a first gap between adjacent pulleys on the first frame member. In a similar manner, the second plurality of pulleys may be mounted to the second frame member in spaced relation along the second distribution axis to define a second gap between adjacent pulleys on the second frame member. The first and second gaps may be configured to allow the first plurality of pulleys and the second plurality of pulleys to pass in between each other as the first pulley array and the second pulley array move across each other. In one embodiment, the first pulley array may be fixed to the frame and the second pulley array may be movable relative to the first pulley array so as to be positionable on opposite sides of each other.

In one embodiment, the first pulley array and the second pulley array may be movable relative to each other along a translation axis so as to be positionable on opposite sides of each other. Moreover, the first distribution axis along which the first plurality of pulleys is distributed on the first frame member may be substantially perpendicular to the translation axis. Again, in a similar manner and in one embodiment, the second distribution axis along which the second plurality of pulleys is distributed on the second frame member may be substantially perpendicular to the translation axis. In one embodiment, the translation axis along which the first pulley array and the second pulley array are relatively movable may be in a substantially vertical direction.

In an alternative embodiment, the first pulley array and the second pulley array may be movable relative to each other through rotation about a pivot axis so as to be positionable on opposite sides of each other. In this embodiment, the pivot axis may be substantially parallel to the first rotational axis of each of the first plurality of pulleys on the first frame member. The pivot axis may also be substantially perpendicular to the first distribution axis of the first frame member. In a similar manner, the pivot axis may be substantially parallel to the second rotational axis of each of the second plurality of pulleys on the second frame member. The pivot axis may also be substantially perpendicular to the second distribution axis of the second frame member.

In another aspect of the disclosure, a manufacturing system for making a fiber optic cable is disclosed. The manufacturing system includes an unwinder for holding a supply of fiber optic cable, at least one winder for forming a plurality of coils from the supply of fiber optic cable associated with the unwinder, and a plurality of accumulators generally disposed between the unwinder and the at least one winder. The unwinder is configured to operatively couple to each of the plurality of accumulators in the manufacturing system during operation.

In one embodiment, the manufacturing system further includes a cutter for severing the fiber optic cable between successive coils. In one embodiment, the cutter may be positioned such that the fiber optic cable is severed at a location that is prior to the fiber optic cable engaging the first plurality of pulleys and the second plurality of pulleys in the accumulator (i.e., upstream of the accumulator). This allows the unwinder to be decoupled from the accumulator(s). In one embodiment, the number of winders is less than or equal to the number of accumulators in the manufacturing system. In another embodiment, the sum of the number of winders and the number of unwinders is less than or equal to the number of accumulators in the manufacturing system. Thus, the number of unwinders, winders, and accumulators in the manufacturing system may be mismatched.

In a further aspect of the disclosure, a method for threading the accumulator according to the first aspect described above with fiber optic cable is disclosed. The method includes positioning the second pulley array on a first side of the first pulley array in a load position; directing a length of fiber optic cable through the accumulator and between the first plurality of pulleys and the second plurality of pulleys on the first pulley array and the second pulley array, respectively, along a substantially straight travel path; and moving the first pulley array and the second pulley array relative to each other so as to position the second pulley array on a second side of the first pulley array opposite to the first side in a threaded position.

In one embodiment, the relative movement of the first pulley array and the second pulley array causes the fiber optic cable to be threaded back and forth between the first plurality of pulleys and the second plurality of pulleys in a substantially serpentine travel path. In one embodiment, the method may further include selecting a predetermined length of fiber optic cable to be stored in the accumulator when in the threaded position and providing a distance between the first pulley array and the second pulley array in the threaded position to correspond to the selected predetermined length of fiber optic cable. In a further embodiment, the method may further include selecting another predetermined length of fiber optic cable to be stored in the accumulator when in the threaded position and adjusting the distance between the first pulley array and the second pulley array to correspond to the another selected predetermined length of fiber optic cable.

In yet a further aspect of the disclosure, a method for manufacturing a fiber optic cable is disclosed. The method includes providing an unwinder for holding a supply of fiber optic cable, at least one winder for forming a plurality of coils from the supply of fiber optic cable associated with the unwinder, and a plurality of accumulators disposed between the unwinder and the at least one winder; coupling the unwinder to one of the plurality of accumulators; using the unwinder, threading the one of the plurality of accumulators to store a predetermined length of fiber optic cable in the one of the plurality of accumulators; and coupling the unwinder to another of the plurality of accumulators.

In one embodiment, the method may further include severing the fiber optic cable prior to coupling the unwinder to another of the plurality of accumulators, wherein the fiber optic cable is severed at a location that is prior to the fiber optic cable engaging the first plurality of pulleys and the second plurality of pulleys in the accumulator. In one embodiment, the method may further include, using the at least one winder, forming a coil from the predetermined length of fiber optic cable stored in the one of the plurality of accumulators and, using the unwinder, threading the another of the plurality of accumulators to store the predetermined length of fiber optic cable in the another of the plurality of accumulators. In one embodiment, the step of forming the coil from the predetermined length of fiber optic cable stored in the one of the plurality of accumulators and the step of threading the another of the plurality of accumulators to store the predetermined length of fiber optic cable in the another of the plurality of accumulators may be performed at least partially at the same time. In one embodiment, the coil includes opposed ends, and the method may further include terminating the opposed ends of the coil with a connector.

**Brief Description of the Drawings**

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.

Fig. 1 is a perspective view of a jumper fiber optic cable as known in the fiber optic industry;
Fig. 2 is a conventional manufacturing system for making the jumper fiber optic cable of Fig. 1;
Figs. 3A and 3B illustrate a conventional accumulator in the manufacturing system shown in Fig. 2;
Fig. 4 illustrates a connectorizer apparatus for terminating the ends of a coil as known in the fiber optic industry;
Fig. 5 is a manufacturing system for making the jumper fiber optic cable of Fig. 1 in accordance with an embodiment of the disclosure;
Figs. 6A and 6B illustrate an accumulator for the manufacturing system shown in Fig. 5 in accordance with an embodiment of the disclosure;
Figs. 7A-7E illustrate a threading process of the accumulator shown in Figs. 6A and 6B in accordance with an embodiment of the disclosure;
Figs. 8A-8E illustrate a threading process of the accumulator shown in Figs. 6A and 6B in accordance with another embodiment of the disclosure;
Figs. 9A-9C illustrate a threading process of an accumulator in accordance with another embodiment of the disclosure;
Figs. 10A and 10B illustrate a manufacturing system for making the jumper fiber optic cable of Fig. 1 in accordance with an embodiment of the disclosure;
Fig. 11 illustrates a method for operating the manufacturing system shown in Figs. 10A and 10B in accordance with an embodiment of the disclosure;
Fig. 12 illustrates a model used in determining a length of fiber optic cable stored in an accumulator;
Figs. 13A and 13B illustrate another manufacturing system for making the jumper fiber optic cable of Fig. 1 in accordance with an embodiment of the disclosure; and
Fig. 14 illustrates a method for operating the manufacturing system shown in Figs. 13A and 13B in accordance with an embodiment of the disclosure.

**Detailed Description**

Various embodiments will be further clarified by examples in the description below. In general, the description relates to an improved manner to configure an accumulator in a manufacturing system for forming fiber optic coils 16, which as noted above, is part of the process for forming jumper fiber optic cables 10. Similar to current designs, the improved accumulator includes a first pulley array and a second pulley array, where each pulley array includes a plurality of pulleys, and where the pulley arrays are movable relative to each other to increase or decrease the length of fiber optic cable (e.g., extending between the two pulley arrays) stored in the accumulator. In contrast to conventional designs, however, the orientation of the pulleys relative to the distribution of the pulleys along the pulley arrays is different. For example, in the accumulator of manufacturing system 26 described above, the pulleys 44 in each of the sheaves 38, 40 were distributed along the common rotational axis 42, i.e., the rotational axes 42 of the pulleys 44 were parallel to the axis along which the pulleys 44 were distributed (see Fig. 3B). In the improved accumulator according to the present disclosure, the pulleys on each pulley array are reoriented such that their axes are substantially perpendicular to the axis along which the pulleys are distributed. Moreover, the first and second pulley arrays may be moved relative to each other along a translation axis or rotated relative to each other about a pivot axis. The translation axis may be substantially perpendicular to both the distribution axes of the pulleys and the rotational axes of the pulleys. The pivot axis may be substantially parallel to the rotational exes of the pulleys and substantially perpendicular to the distribution axes of the pulleys.

As will be explained in more detail below, this reorientation of the pulleys (i.e., their rotational axes) relative to the distribution axis of the pulleys on the pulley arrays provides an improved arrangement for threading the fiber optic cable through the accumulator. In other words, in the improved accumulator of the present disclosure, the rethreading of the accumulator is not so daunting that operation of the manufacturing system is predicated on avoiding a rethreading processing step. Moreover, the rethreading process for the improved accumulator is fairly straight forward such that automated manufacturing processes may be able to perform the rethreading of the accumulator, and thereby avoid the manual and time-consuming process currently employed for existing accumulators.

Furthermore, because rethreading of the accumulator is a relatively easy and straight-forward process, cuts in the fiber optic cable no longer have to be limited to the downstream side of the accumulator, as it is in the manufacturing system 26 described above (again to avoid rethreading of the accumulator 32). This, in turn, means that the unwinder and the accumulator no longer have to be operationally coupled together at all times during use. Thus, manufacturers have an increased number of design options for arranging the parts of the manufacturing system (i.e., the unwinder, winder, accumulator) to improve operation and throughput (i.e., increased yields in coils produced) of the manufacturing system.

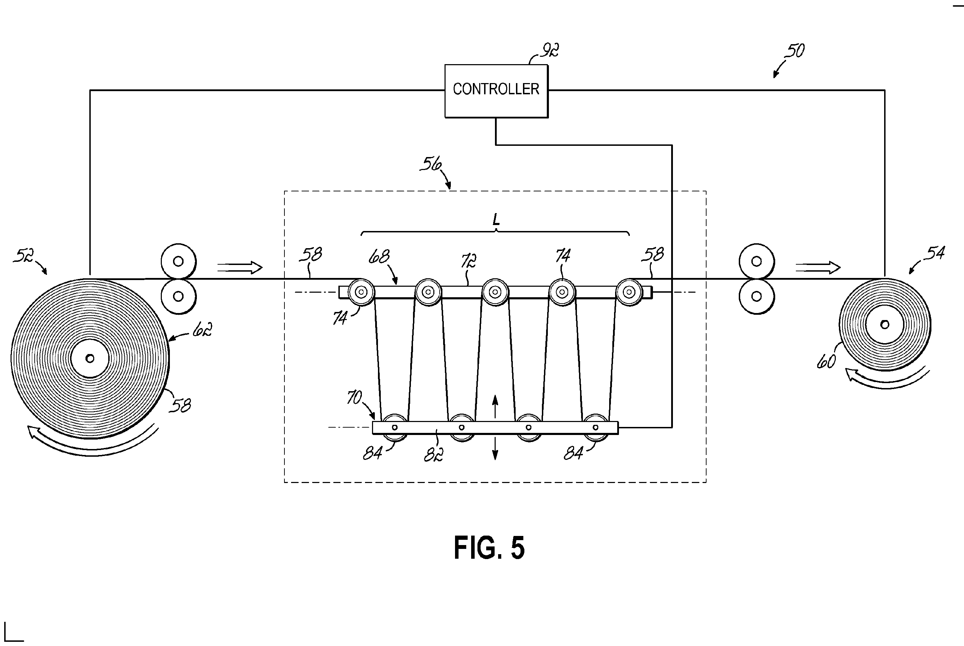

Fig. 5 is a manufacturing system 50 in accordance with an embodiment of the disclosure. The manufacturing system 50 includes an unwinder 52, a winder 54, and an accumulator 56 generally disposed between the unwinder 52 and the winder 54. Similar to the above, the unwinder 52 is configured to hold a supply of fiber optic cable 58 for forming a plurality of coils 60. In an exemplary embodiment, the supply of fiber optic cable 58 may be in the form of a relatively large spool 62 received in the unwinder 52. The unwinder 52 is configured to rotate in order to pay out portions of the fiber optic cable 58 disposed on the spool 62 toward the winder 54. Such unwinders 52 are generally known in the fiber optics industry and, for sake of brevity, will not be further described here. Again, similar to the above, the winder 54 is configured to reel in the fiber optic cable 58 from the unwinder 52 and form a plurality of coils 60 through rotation of the winder 54. Such winders 54 are generally known in the fiber optics industry and will not be further described here for sake of brevity. As described above, the coils 60 are subsequently terminated with connectors 14, such as with a connectorizer apparatus 46 (Fig. 4), to form jumper fiber optic cables 10.

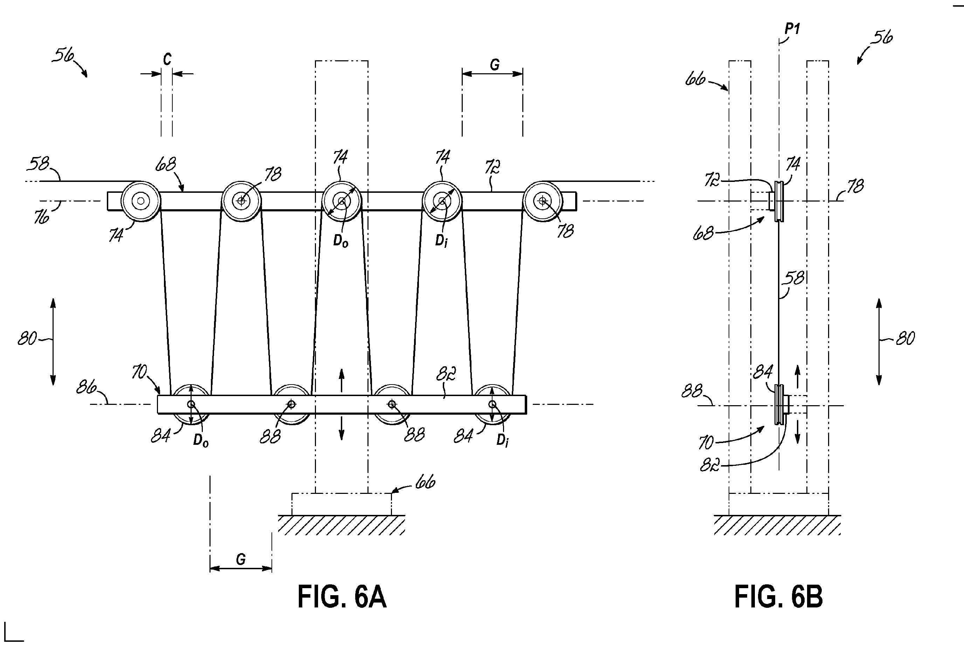

As noted above, the accumulator 56 is generally disposed between the unwinder 52 and the winder 54 and is configured to store a length of the fiber optic cable 58 therein. Figs. 6A and 6B illustrate an accumulator 56 in accordance with an embodiment of the disclosure. In an exemplary embodiment, the accumulator 56 includes a support frame 66 that supports a first pulley array 68 and a second pulley array 70. The fiber optic cable 58 is threaded through the first and second pulley arrays 68, 70 in a serpentine travel path from the unwinder 52 to the winder 54. The first pulley array 68 and the second pulley array 70 are movable relative to each other. By way of example, in an exemplary embodiment, the first pulley array 68 may be fixed to the frame 66 of the accumulator 56 so as to be stationary while the second pulley array 70 may be movable relative to the support frame 66 and relative to the first pulley array 68. The movement of the second pulley array 70 may be along a generally vertical direction, for example. However, the relative movement of the first and second pulley arrays 68, 70 may be in other directions, such as in a generally horizontal direction. To facilitate the movement of the second pulley array 70 relative to the frame 66 and the first pulley array 68, the accumulator 56 may include a drive device (not shown) coupled to the second pulley array 70 for achieving the desired movement. The drive device may include a broad range of motors, actuators (hydraulic, pneumatic), gear arrangements, rack-and-pinion systems, chain/belt arrangement, etc. for moving the second pulley array 70.

It should be recognized that the fixed/movable arrangement of the pulley arrays 68, 70 in accumulator 56 described above is merely exemplary and that other configurations are possible. For example, in an alternative embodiment, both the first pulley array 68 and the second pulley array 70 may be movable relative to the support frame 66 of the accumulator 56 (e.g., in a vertical direction). In this embodiment, both the first and second pulley arrays 68, 70 may be coupled to the drive device for achieving the desired movement. Thus, while the following description provides the first pulley array 68 as being fixed and the second pulley array 70 as being movable, it should be understood that other arrangements of the pulley arrays 68, 70 are possible and remain within the scope of the present disclosure.

The first pulley array 68 includes a first frame member 72 (such as a beam, arm, etc.) configured to carry a first plurality of pulleys 74. In an exemplary embodiment, the pulleys 74 are distributed along the frame member 72 generally along a distribution axis 76 (e.g., a horizontal axis). The pulleys 74 are mounted to the frame member 72 so as to be rotatable about a rotational axis 78. In an exemplary embodiment, the rotational axis 78 of each of the pulleys 74 may be substantially perpendicular to the distribution axis 76 along which the pulleys 74 are distributed along the frame member 72. This is in contrast to the orientation of the pulleys 44 in the sheave 38 described above, in which the rotational axes of the pulleys 44 are substantially parallel to the distribution axis of the pulleys 44 along the sheave 38. Moreover, in the exemplary embodiment, the distribution axis 76 and the rotational axes 78 may lie in a common plane, and more specifically a common substantially horizontal plane. Furthermore, the second pulley array 70 may be movable relative to the first pulley array 68 along a translation axis 80. In an exemplary embodiment, the translation axis 80 may be substantially perpendicular to both the distribution axis 76 and the rotational axis 78. More specifically, in the exemplary embodiment, and as noted above, the translation axis 80 may be in a substantially vertical direction.

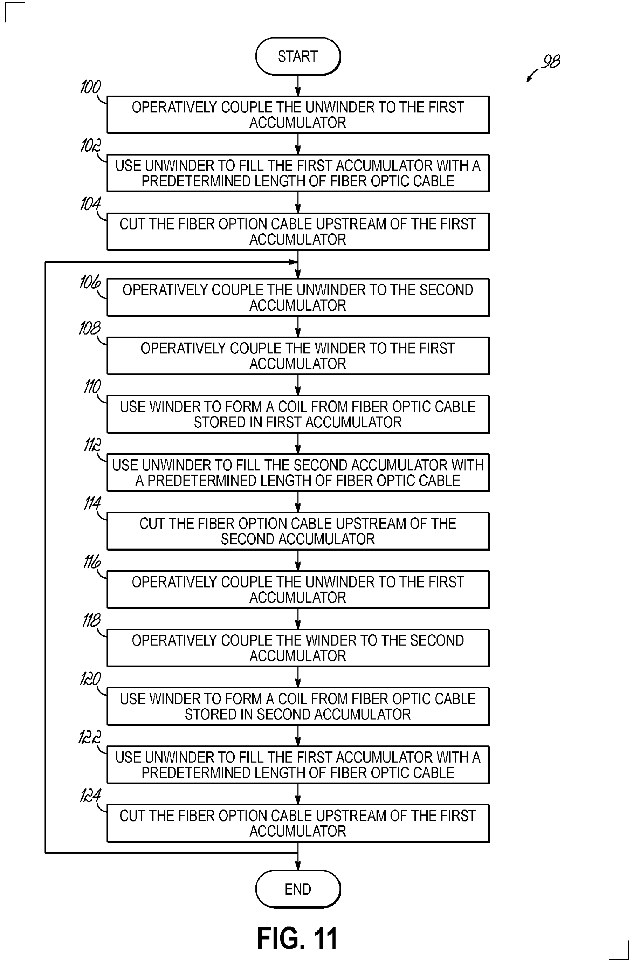

Each of the pulleys 74 in the first pulley array 68 includes an inner diameter $D_i$ and an outer diameter $D_o$ (Figs. 6A and 11), thereby defining a region for securely receiving a portion of the fiber optic cable 58 therein. In an exemplary embodiment, the outer diameter $D_o$ of the pulleys 74 may be between about 50 mm and about 150 mm, and preferably between about 60 mm and about 130 mm. The inner diameter $D_i$ may be between about 70% and about 90% of the

outer diameter $D_o$, and preferably about 80% of the outer diameter $D_o$. The number of pulleys 74 along the frame member 72 may vary depending on the application. In an exemplary embodiment, however, the number of pulleys 74 distributed along the frame member 72 of the first pulley array 68 may be between three pulleys and twelve pulleys, and preferably between five pulleys and nine pulleys.

The second pulley array 70 includes a second frame member 82 (such as a beam, arm, etc.) configured to carry a second plurality of pulleys 84. In an exemplary embodiment, the pulleys 84 are distributed along the frame member 82 generally along a distribution axis 86 (e.g., a horizontal axis). The pulleys 84 are mounted to the frame member 82 so as to be rotatable about a rotational axis 88. In an exemplary embodiment, the rotational axis 88 of each of the pulleys 84 may be substantially perpendicular to the distribution axis 86 along which the pulleys 84 are distributed along the frame member 82. This is in contrast to the orientation of the pulleys 44 in the sheave 40 described above, in which the rotational axes of the pulleys 44 are substantially parallel to the distribution axis of the pulleys 44 along the sheave 40. Moreover, in the exemplary embodiment, the distribution axis 86 and the rotational axes 88 may lie in a common plane, and more specifically a common substantially horizontal plane. Similar to the above, the translation axis 80 may be substantially perpendicular to both the distribution axis 86 and the rotational axis 88.

Each of the pulleys 84 in the second pulley array 70 includes an inner diameter $D_i$ and an outer diameter $D_o$ (Fig. 6A), thereby defining a region for securely receiving a portion of the fiber optic cable 58. In an exemplary embodiment, the outer diameter $D_o$ of the pulleys 84 may be between about 50 mm and about 150 mm, and preferably between about 60 mm and about 130 mm. The inner diameter $D_i$ may be between about 70% and about 90% of the outer diameter $D_o$, and preferably about 80% of the outer diameter $D_o$. In an exemplary embodiment, the pulleys 84 of the second pulley array 70 may be the same size as the pulleys 74 on the first pulley array 68. In an alternative embodiment, however, the pulleys 84 of the second pulley array 70 may have a size different than the size of the pulleys 74 of the first pulley array 68.

The number of pulleys 84 along the frame member 82 may vary depending on the application. In an exemplary embodiment, however, the number of pulleys 84 distributed along the frame member 82 of the second pulley array 70 may be between three pulleys and twelve pulleys, and preferably between five pulleys and nine pulleys. The number of pulleys 84 on the frame member 82 may be the same or be different from the number of pulleys 74 on the frame member 72 of the first pulley array 68. By way of example, the number of pulleys 84 on the second pulley array 70 may be less than the number of pulleys 74 on the first pulley array 68. For example, in an exemplary embodiment, the number of pulleys 74 on the first pulley array 68 may be one more than the number of pulleys 84 on the second pulley array 70. Other differences in the number of pulleys are possible, however.

In one aspect of the disclosure, the first pulley array 68 and the second pulley array 70 are configured to allow the pulley arrays 68, 70 to pass across or by each other during movements along the translation axis 80. Notably, this is not possible in the accumulator 32 of the manufacturing system 26 described above. By way of example, with the first pulley array 68 fixed, the second pulley array 70 is configured to pass from one side of the first pulley array 68 to the other (e.g., opposite) side of the first pulley array 68. Thus, in the configuration shown in Fig. 6A, the second pulley array 70 is able to move from a position below the first pulley array 68 to a position above the first pulley array 68, and vice versa. As will be explained in more detail below, this allows the accumulator 56 to be threaded in a relatively easy and straight-forward manner.

To facilitate proper operation of the accumulator 56, the pulleys 74 from the first pulley array 68 and the pulleys 84 from the second pulley array 70 substantially lie within a common plane $P_1$ (e.g., +/- 2 mm out of common plane). As illustrated in Fig. 6B, in an exemplary embodiment the plane $P_1$ may be a generally vertical plane. In order to allow the second pulley array 70 to pass over or across the first pulley array 68, the spacing G (Fig. 6A) between adjacent pulleys 74, 84 on the frame members 72, 82, respectively, has to be greater than the outer diameter $D_o$ of the pulleys 84, 74 on the opposite frame members 82, 72. In this way, with the pulleys 74, 84 lying within the same plane Pi, the pulleys 74, 84 are permitted to pass by or in between each other. In an exemplary embodiment, this may be made possible by locating the frame members 72, 82 of the first and second pulley arrays 68, 70, respectively, on opposite sides of the plane $P_1$ (e.g., see Fig. 6B). In an exemplary embodiment, the gap G between adjacent pulleys 74, 84 may be selected such that the clearance C, which is the distance between the outer diameter $D_o$ of pulleys 74 and the outer diameter $D_o$ of the pulleys 84 when the distribution axes 76, 86 of the first pulley array 68 and second pulley array 70, respectively, are substantially coaxially arranged, may be between about 0.5 mm and about 5 mm. Other values are also possible so long as the pulleys 74 and 84 do not interfere with each other as the pulley arrays 68, 70 move across each other.

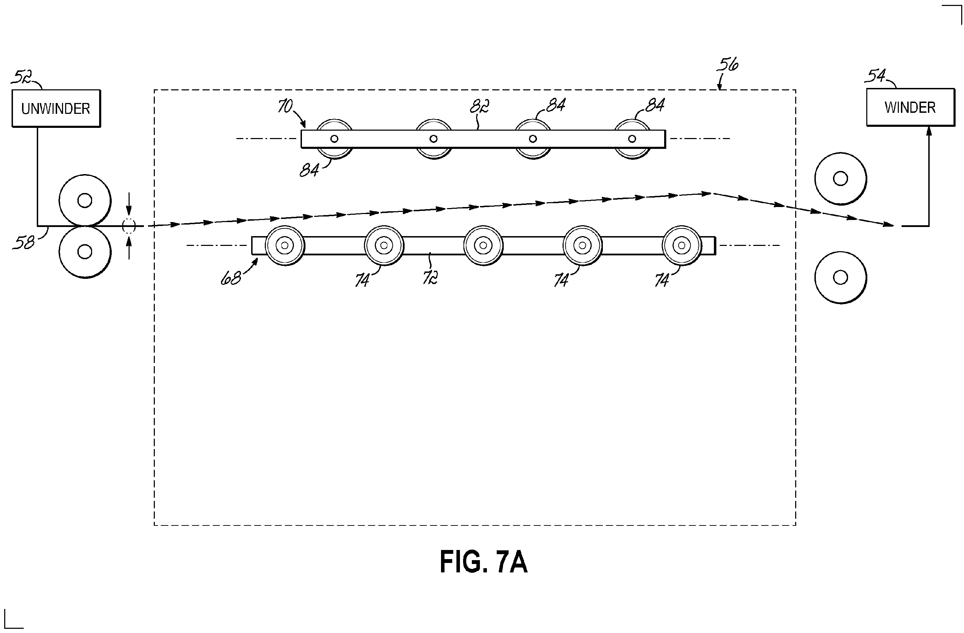

As noted above, the ability to move the second pulley array 70 across the first pulley array 68 provides a relatively easy and straight-forward way to thread the accumulator 56. Figs. 7A-7E schematically illustrate an exemplary threading operation for the accumulator 56 in accordance with one embodiment of the disclosure. Initially, there is no fiber optic cable 58 that extends across the accumulator 56 and the pulley arrays 68, 70. The second pulley array 70 may be placed on a first side of the first pulley array 68. This position may be referred to as the load position. As shown in Fig. 7A, in the load position, the second pulley array 70 may be positioned generally above the first pulley array 68.

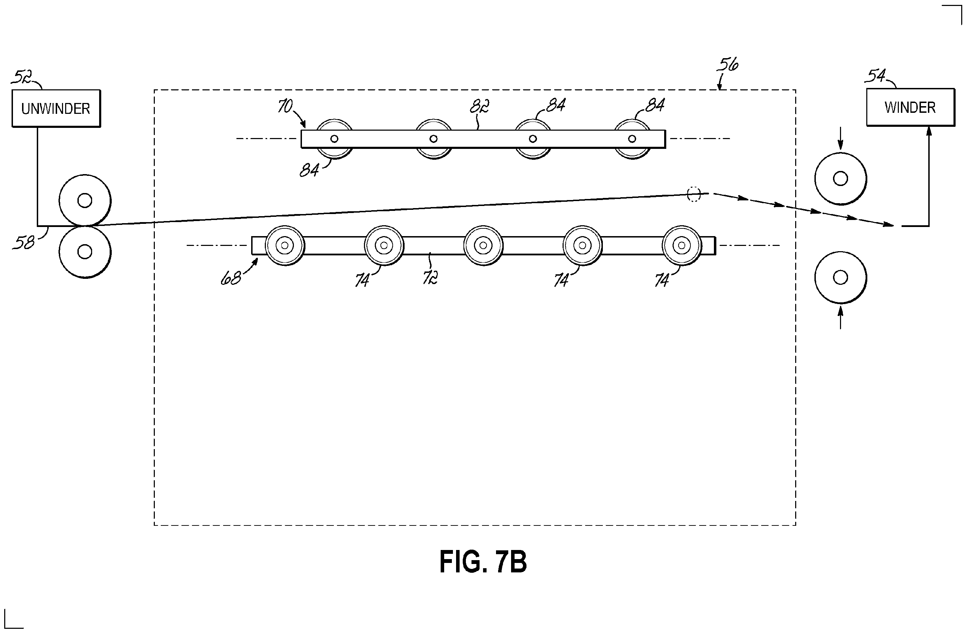

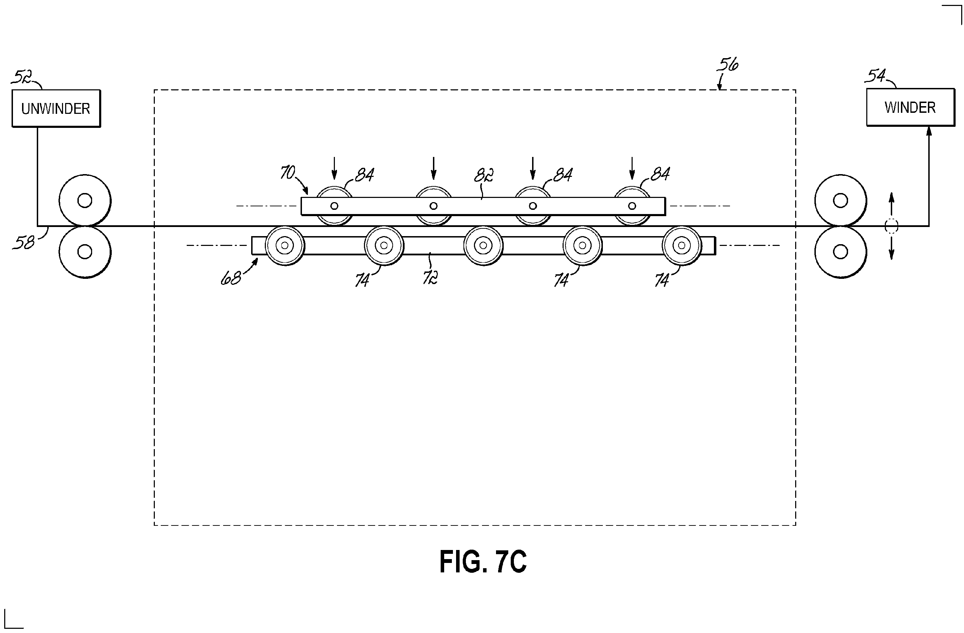

When in this position, the fiber optic cable 58 from the unwinder 52 may be paid out so as to extend across a top portion of the pulleys 74 of the first pulley arrangement 68 along a substantially straight travel path. The end of the fiber optic cable 58 may be fixed to an aspect of the accumulator 56 opposite to the unwinder 52 or be fixed to an aspect of the winder 54. This is illustrated in Figs. 7B and 7C, for example.

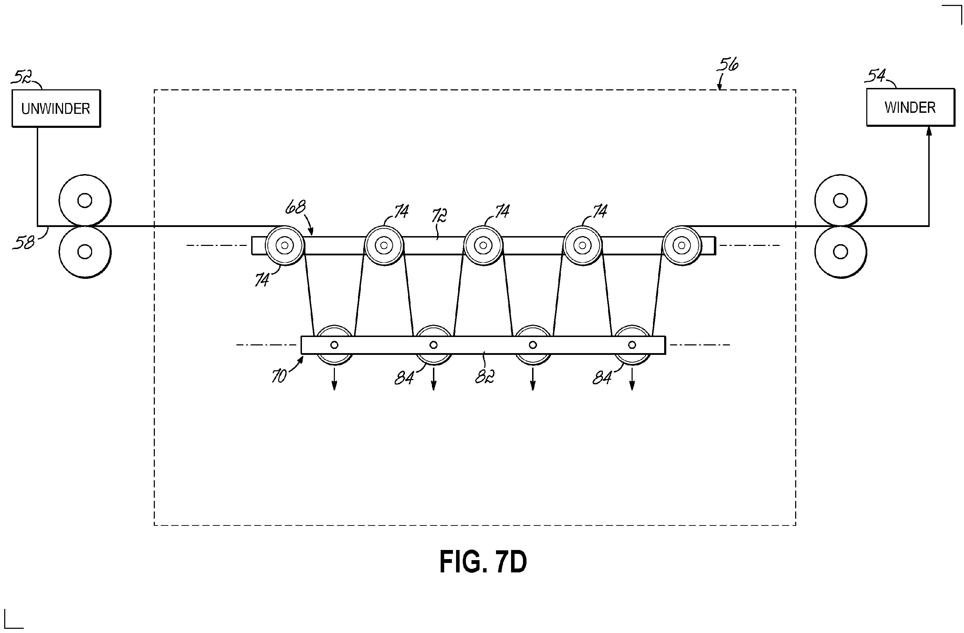

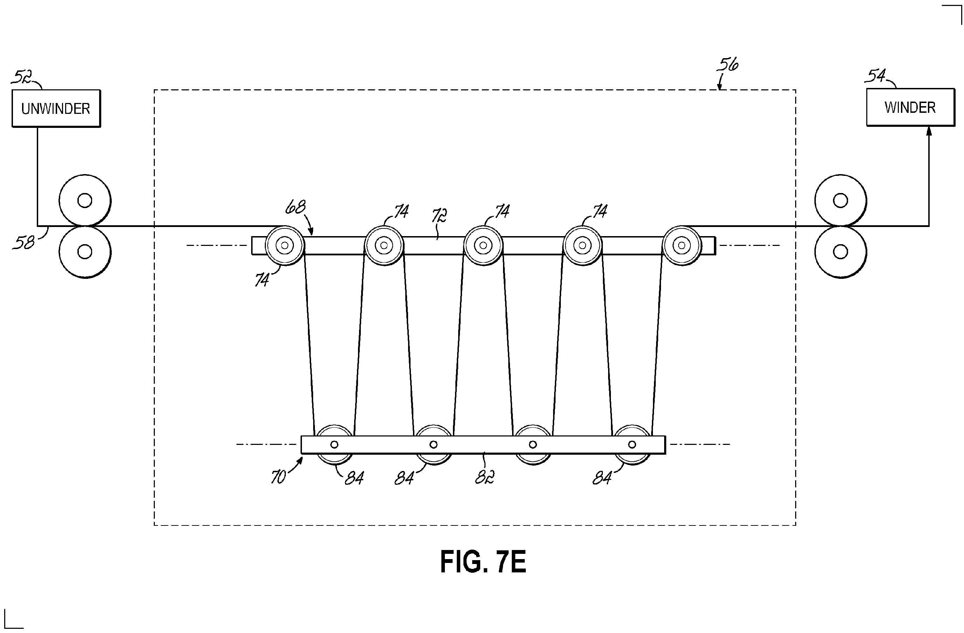

With the fiber optic cable 58 so arranged, the second pulley array 70 may be moved to the other side of the first pulley array 68, such as by moving the second pulley array 70 downwardly relative to the first pulley array 68. As the pulleys 84 are moving downwardly, a lower portion of the pulleys 68 engage the fiber optic cable 58 and catch the fiber optic cable 58 on the pulleys 68. This is illustrated in Fig. 7C. As illustrated in Figs. 7D and 7E, with further movement of the second pulley array 70 downwardly and onto the other side of the first pulley array 68, additional fiber optic cable 58 is paid out from the unwinder 52 such that the fiber optic cable 58 extends between the plurality of pulleys 74, 84 on the first pulley array 68 and the second pulley array 70, respectively. Fig. 7E illustrates the threaded position of the accumulator 56 with the fiber optic cable 58 having a serpentine travel path through the accumulator 56. Thus, by i) positioning the second pulley array 70 in the load position; ii) pulling the fiber optic cable 58 from the unwinder 52 and across the pulleys 74 of the first pulley array 68; and iii) moving the second pulley array 70 from the load position to the threaded position, the fiber optic cable 58 is automatically threaded through the accumulator 56 in the serpentine travel path.

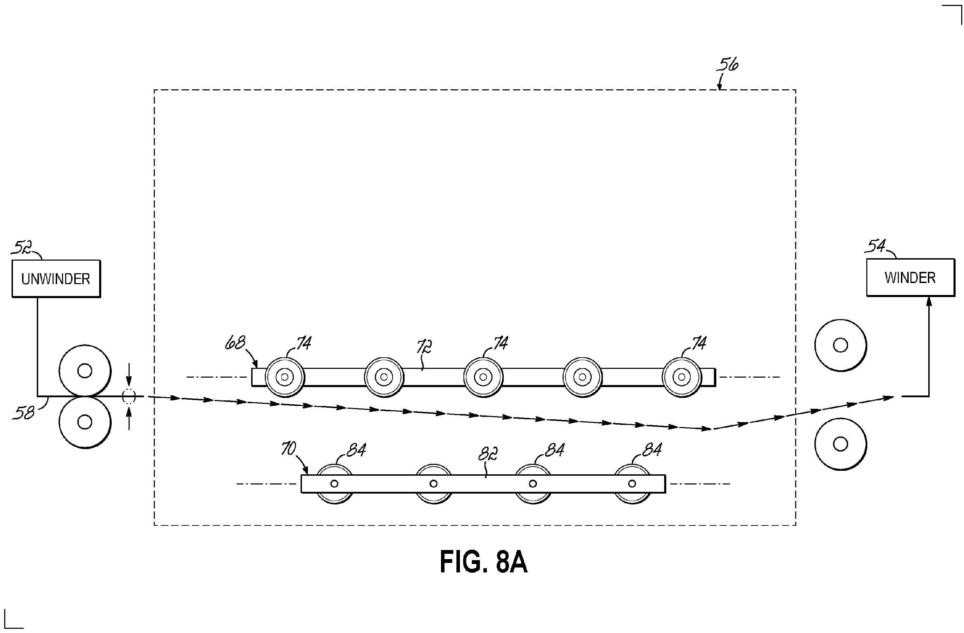

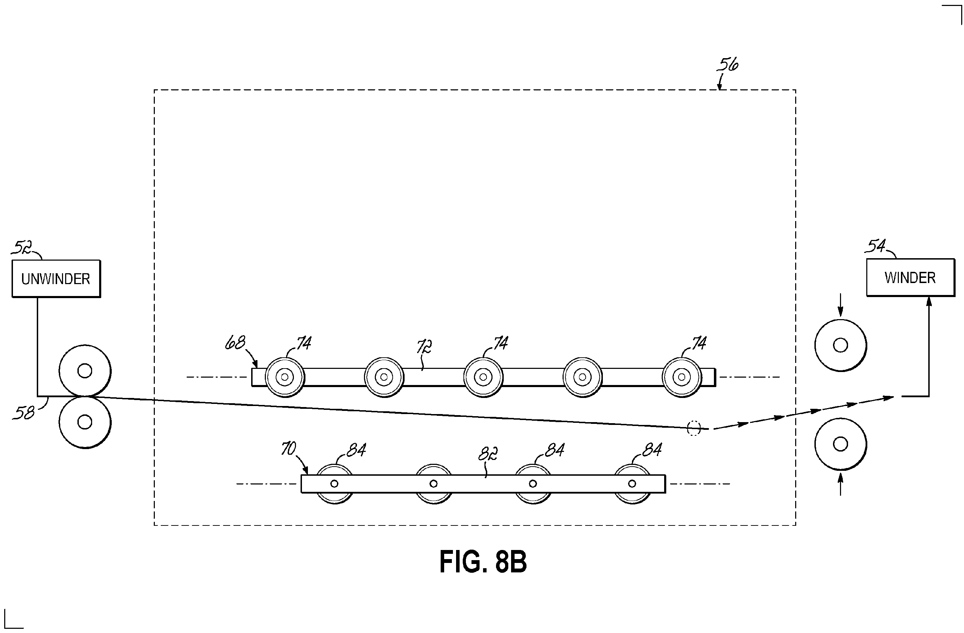

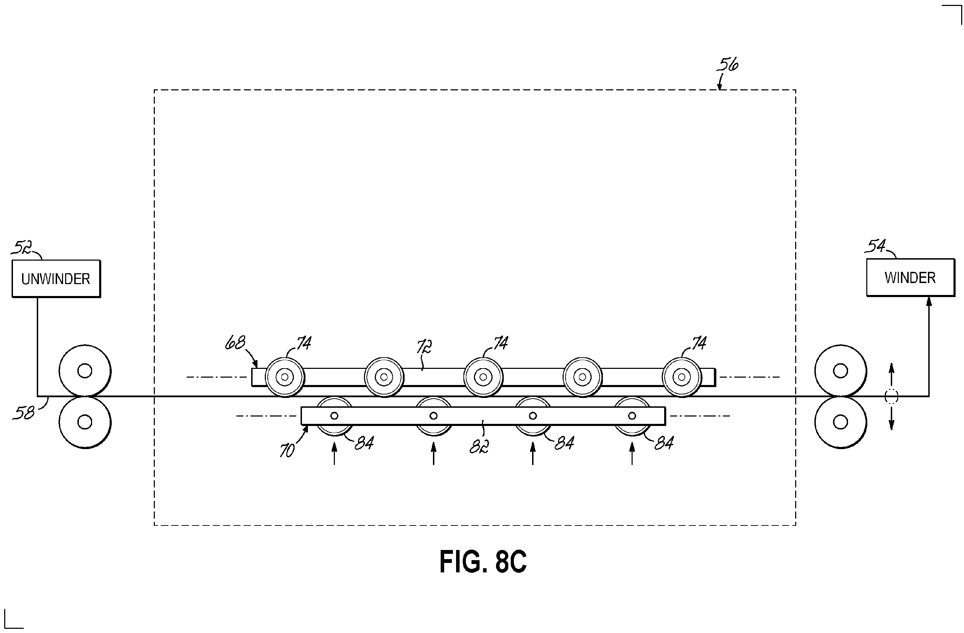

Figs. 8A-8E schematically illustrate a threading operation for the accumulator 56 in accordance with an alternative embodiment of the disclosure. Again, initially there is no fiber optic cable 58 that extends across the accumulator 56 and the pulley arrays 68, 70. The second pulley array 70 may be placed on a first side of the first pulley array 68. As shown in Fig. 8A, in the load position, the second pulley array 70 may be positioned generally below the first pulley array 68. When in this position, the fiber optic cable 58 from the unwinder 52 may be paid out so as to extend across a bottom portion of the pulleys 74 of the first pulley arrangement 68 along a substantially straight travel path. The end of the fiber optic cable 58 may be fixed to an aspect of the accumulator 56 opposite to the unwinder 52 or be fixed to an aspect of the winder 54 itself. This is illustrated in Figs. 8B and 8C.

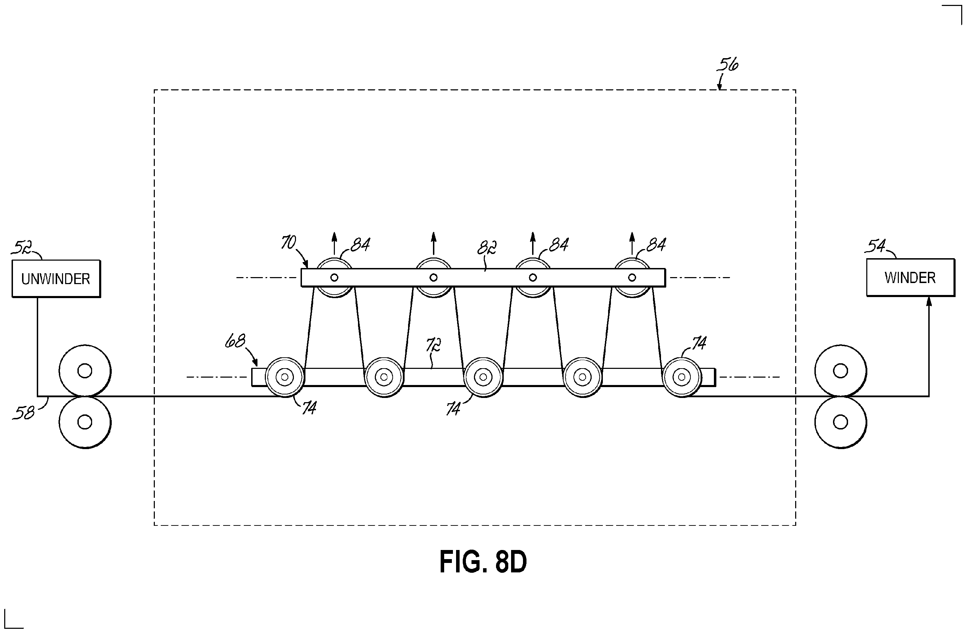

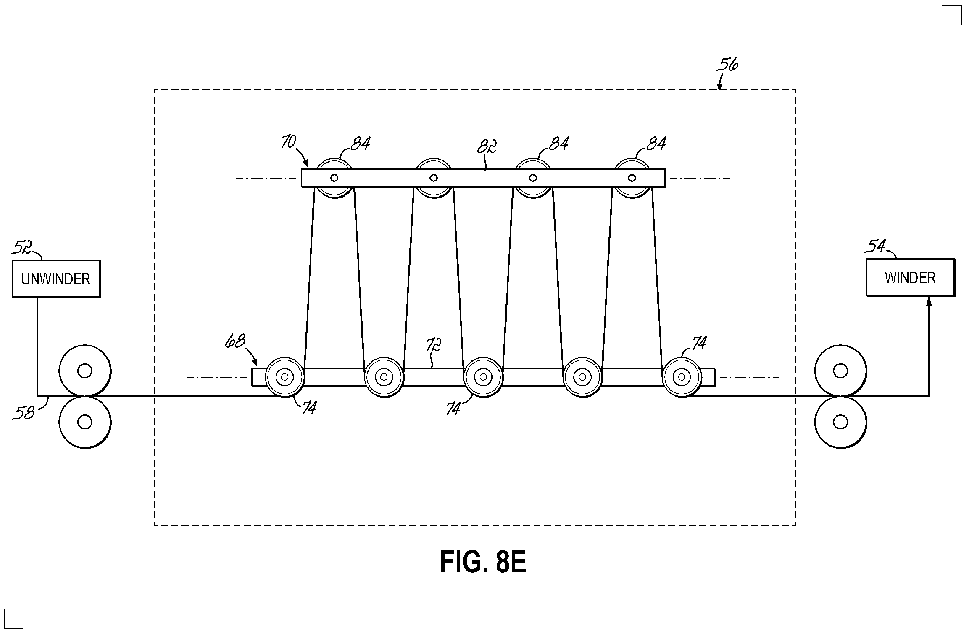

With the fiber optic cable 58 so arranged, the second pulley array 70 may be moved to the other side of the first pulley array 68, such as by moving the second pulley array 70 upwardly relative to the first pulley array 68. As the pulleys 84 are moving upwardly, an upper portion of the pulleys 68 engage the fiber optic cable 58 and catch the fiber optic cable 58 on the pulleys 68. This is illustrated in Fig. 8C. As illustrated in Figs. 8D and 8E, with further movement of the second pulley array 70 upwardly and onto the other side of the first pulley array 68, additional fiber optic cable 58 is paid out from the unwinder 52 such that the fiber optic cable 58 extends between the plurality of pulleys 74, 84 on the first pulley array 68 and the second pulley array 70, respectively. Fig. 8E illustrates the threaded position of the accumulator 56 with the fiber optic cable 58 having a serpentine travel path through the accumulator 56.

As illustrated from the above, the rethreading of the accumulator 56 is a relatively easy and straight-forward process. Moreover, the steps for rethreading the accumulator 56 may be conducive to automated processes. By way of example, a controller 92 (Fig. 5) may be operatively coupled to the first and/or second pulley array 68, 70 for controlling the relative movement between the two arrays 68, 70. Additionally, the controller 92 may be operatively coupled to a robot (not shown) having a movable arm capable of grasping an end of the fiber optic cable 58 adjacent the unwinder 52 and upstream of the accumulator 56, pulling the fiber optic cable 58 across the pulleys 74 of the first pulley array 68, and fixing the free end of the fiber optic cable 58 on the downstream side of the accumulator 56. The automation of the rethreading process generally provides faster, more consistent, and less costly manufacturing of the jumper fiber optic cables 10 as compared to current processes that include manual steps, for example.

As noted above, because the issues related to rethreading of the accumulator have been obviated by the arrangement of first and second pulley arrangements 68, 70 as described above, the limitation that the fiber optic cable 58 only be cut on the downstream side of the accumulator 56 may also be set aside. In this regard, one of the benefits of accumulator 56, and its ability to be easily rethreaded, is that the cut in the fiber optic cable 58 necessary to form discrete coils 60, may now be located on the upstream side of the accumulator 56. This, in turn, allows manufacturers to arrange the various parts of the manufacturing system 50 in different configurations that may result in efficiencies and improvements to the manufacturing process that heretofore have been generally unattainable.

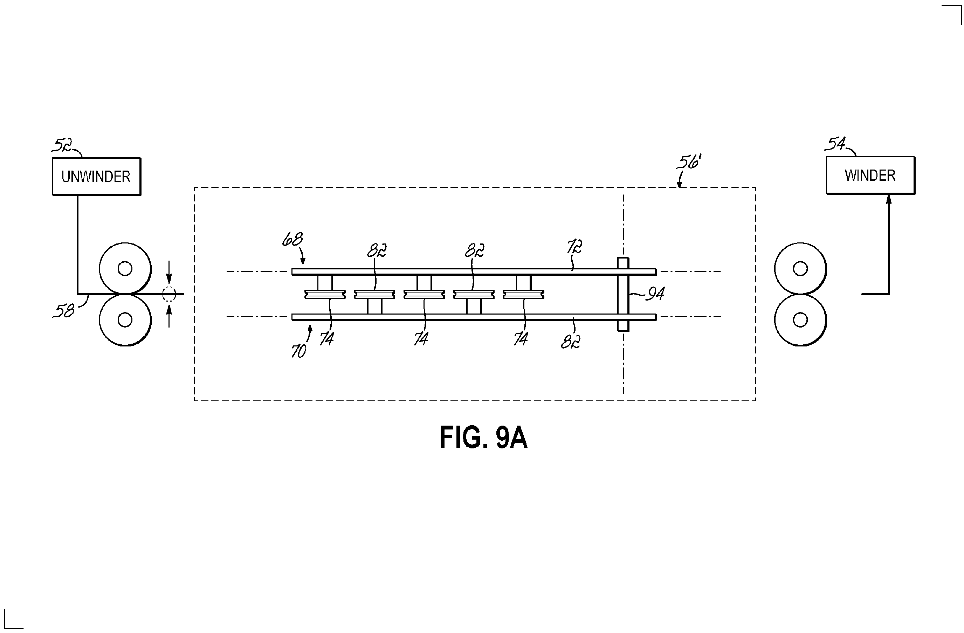

Figs. 9A-9C schematically illustrate a threading operation for an accumulator 56' in accordance with an alternative embodiment. The primary difference between the accumulator 56 in Figs. 7A-8E and the accumulator 56' shown in Figs. 9A-9C is directed to the relative movement between the first pulley array 68 and the second pulley array 70 so as to be positionable on opposite sides of each other. In Figs. 7A-8E, the second pulley array 70 was movable relative to the first pulley array 68 along translation axis 80, which in an exemplary embodiment, may be in a vertical direction. In the embodiment shown in Figs. 9A-9C, however, the second pulley array 70 is movable relative to the first pulley array 68 through a rotation about a pivot axis 94 that extends through both the first and second frame members 72, 82.

In this embodiment, the pivot axis 94 is substantially parallel to each of the rotational axes 78 of the first plurality of pulleys 74 mounted to the first frame member 72 and is substantially perpendicular to the first distribution axis 76 along which the first plurality of pulleys 74 are distributed along the first frame member 72. Additionally, in this embodiment the pivot axis 94 is substantially parallel to each of the rotational axes 88 of the second plurality of pulleys 84 mounted to the second frame member 82 and is substantially perpendicular to the second distribution axis 86 along which the second plurality of pulleys 84 are distributed along the second frame member 82. Moreover, in this embodiment, the first plurality of pulleys 74 and the second plurality of pulleys 84 remain within the common plane $P_1$ through the rotation of the second pulley array 70 about the pivot axis 74 similar to that shown in Figs. 7A-8E.

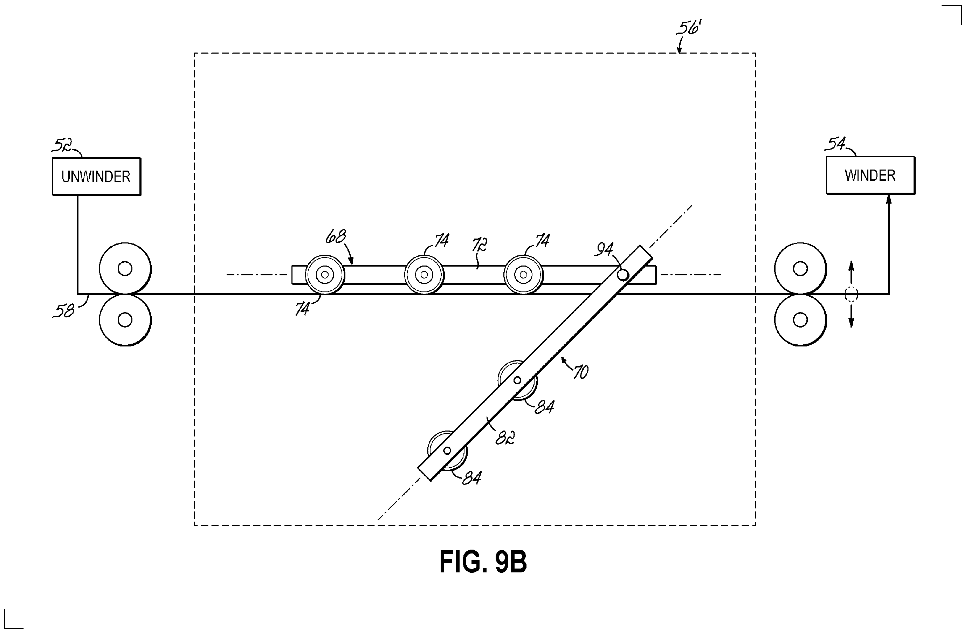

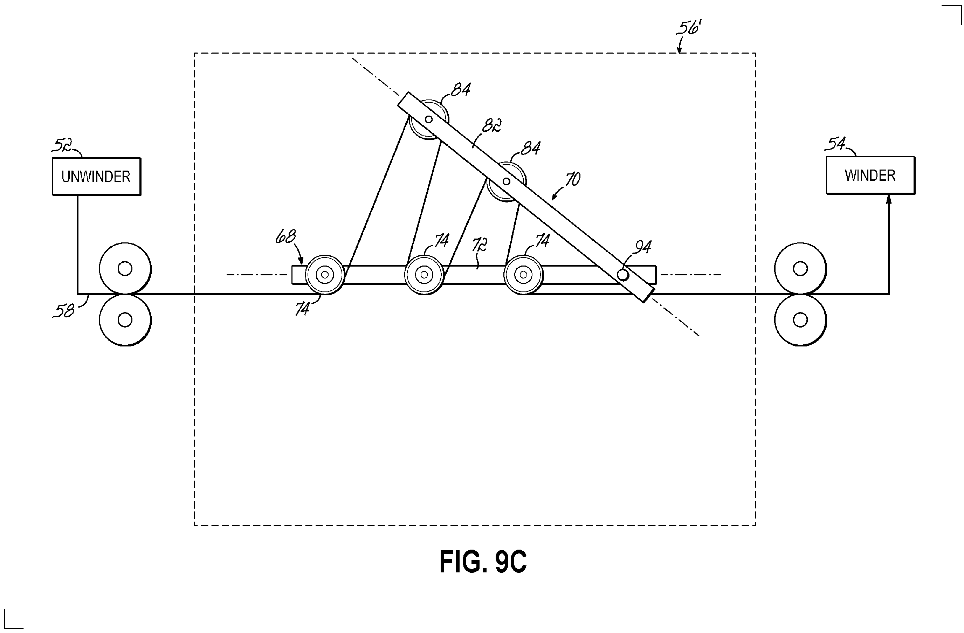

Operation of the accumulator 56' to store a predetermined length of fiber optic cable 58 is similar to that described above for Figs. 7A-8E. Fig. 9B illustrates the accumulator 56' in the load position where the fiber optic cable is able to pass between the first plurality of pulleys 74 and the second plurality of pulleys 84 in a substantially straight travel path. Fig. 9C illustrates the accumulator 56' in the threaded position, where the fiber optic cable 58 is threaded through the first and second pulley arrays 68, 70 in a serpentine travel path from the unwinder 52 to the winder 54. Accordingly, the relative movement of the first pulley array 68 and the second pulley array 70 should not be limited to any particular type of movement between the two pulley arrays 68, 70.

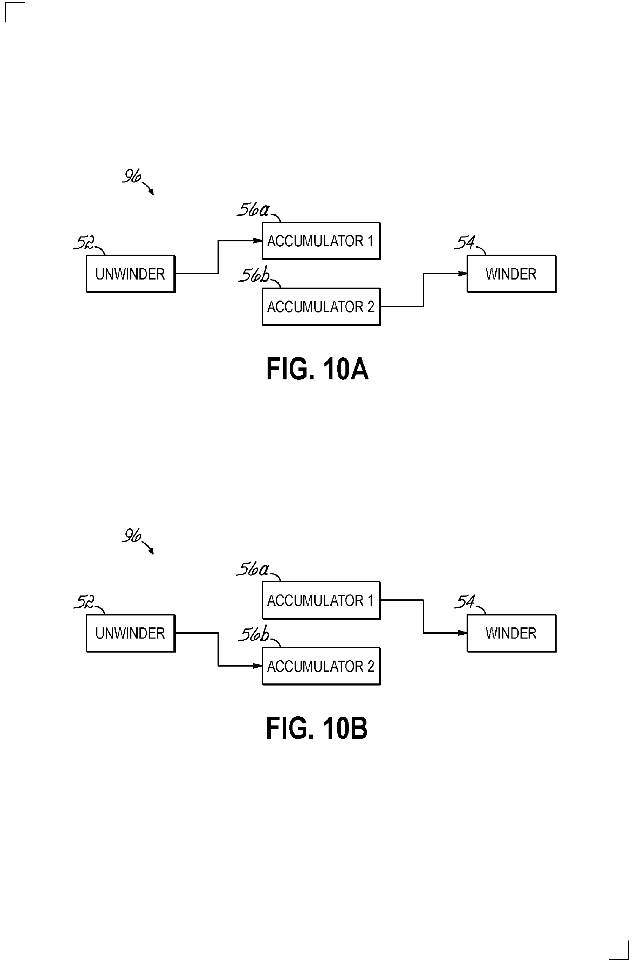

Figs. 10A and 10B illustrate a manufacturing system 96 in accordance with an embodiment of the disclosure, in which like reference numbers refer to like features in the manufacturing system 50 illustrated in Fig. 5. The manufacturing system 96 includes an unwinder 52, a winder 54, and a plurality of accumulators 56 disposed between the unwinder 52 and the winder 54. In this embodiment, the unwinder 52 and the winder 54 are configured to operate with more than just one accumulator 56 (e.g., two accumulators 56a, 56b). In this regard, because the cut in the fiber optic cable 58 may be made upstream of the accumulator 56, the unwinder 52 is no longer operatively tied to the accumulator 56 and may be used with more than one accumulator 56. Fig. 10A illustrates the unwinder 52 being operatively coupled to the first accumulator 56a while Fig. 10B illustrates the unwinder 52 being operatively coupled to the second accumulator 56b. This may be advantageous in designing and improving manufacturing systems and processes for making jumper fiber optic cables, for example.

Fig. 11 is an exemplary method 98 for forming coils 60 using the manufacturing system 96 illustrated in Figs. 10A and 10B. In a first step 100, the unwinder 52 may be operatively coupled to the first accumulator 56a. By way of example, and without limitation, the unwinder 52 may be positioned on a movable platform or conveyor (not shown) for moving the unwinder 52 between the plurality of accumulators 56, which may be in a fixed position on a factory floor or other support surface. In a next step 102, the first accumulator 56a may be threaded so as to hold a predetermine length L of fiber optic cable 58. The process for threading the first accumulator 56a was described above and will not be repeated here for sake of brevity. The predetermined length L of the fiber optic cable 58 may correspond to the desired length of the jumper fiber optic cable 10 (e.g., 20 m, 30 m, etc.). When the desired length of fiber optic cable 58 has been stored in the accumulator 56a, and in a next processing step 104, the fiber optic cable 58 may be cut or severed from the spool 62 of fiber optic cable 58 associated with the unwinder 52. In this embodiment, however, the fiber optic cable 58 may be cut upstream of the first accumulator 56a so that the unwinder 52 is operatively disconnected from the first accumulator 56a.

In a next step 106, the unwinder 52 may be operatively coupled to the second accumulator 56b. For example, the movable platform may be activated, such as under the control of controller 92, such that the unwinder 52 is now positioned adjacent to the second accumulator 56b. In a further step 108, the winder 54 may be operatively coupled to the first accumulator 56a. By way of example, and without limitation, the winder 54 may be positioned on a movable platform or conveyor (not shown) for moving the winder 54 between the plurality of accumulators 56.

With the unwinder 52 and the winder 54 so positioned relative to the second accumulator 56b and first accumulator 56a, respectively, and in a next step 110, the winder 54 may be used to form a coil 60 from the predetermined length L of fiber optic cable 58 stored in the first accumulator 56a. In another step 112, using the unwinder 52, the second accumulator 56b may be threaded so as to hold a predetermine length L of fiber optic cable 58. The process for threading the second accumulator 56b is the same as that described above and will not be repeated here for sake of brevity. The predetermined length L of the fiber optic cable 58 may correspond to the desired length of the jumper fiber optic cable 10. When the desired length of fiber optic cable 58 has been stored in the second accumulator 56b, and in a next processing step 114, the fiber optic cable 58 may be cut. Again, the fiber optic cable 58 may be cut upstream of the second accumulator 56b so that the unwinder 52 may be operatively disconnected from the second accumulator 56b. In a preferred embodiment, the step 110 of forming a coil 60 from the fiber optic cable 58 stored in the first accumulator 56a and the step 112 for threading the second accumulator 56b with fiber optic cable 58 may be performed together such that at least a portion of the time for performing the steps 110, 112 overlap (e.g., performed simultaneously).

In yet a further step 116, the unwinder 52 may be operatively coupled to the first accumulator 56a, and in another step 118, the winder 54 may be operatively coupled to the second accumulator 56b. In step 120, the winder 54 may be used to form a coil 60 from the predetermined length L of fiber optic cable 58 stored in the second accumulator 56b. In another step 122, using the unwinder 52, the first accumulator 56a may be threaded so as to hold the predetermine length L of fiber optic cable 58. When the desired length of fiber optic cable 58 has been stored in the first accumulator 56a, and in a next processing step 124, the fiber optic cable 58 may be cut. The fiber optic cable 58 may be cut upstream of the first accumulator 56a so that the unwinder 52 may be operatively disconnected from the first accumulator 56a. In a preferred embodiment, the step 120 of forming a coil 60 from the fiber optic cable 58 stored in the second accumulator 56b and the step 122 for threading the first accumulator 56a with fiber optic cable 58 may be performed together such that at least a portion of the time for performing the steps 120, 122 overlap (e.g., performed simultaneously).

In accordance with the method 98, the steps 106-124 may be repeated so long as there is fiber optic cable 58 remaining on the spool 62 to produce a plurality of coils 60. When the spool 62 runs out of fiber optic cable 58, a new spool may be operatively coupled to the unwinder 52 and the process continued for making additional coils 60.

In one aspect of the disclosure, it should be understood that the predetermined length L of fiber optic cable 58 stored in the accumulators 56a, 56b is a selectable quantity and may be changed depending on the length of the jumper fiber optic cable 10 desired. For example, and as noted above, the length of the jumper fiber optic cable 10 may be 20 m, 30 m, or some other greater or lesser value. The length of the coil 60 is related to the desired length of the final jumper fiber optic cable 10 in a known manner. For example, the length of the coil 60 may be slightly greater than the length of the jumper fiber optic cable 10 and some portion of the coil 60 is removed during the termination of the ends with connectors 14. In any event, the length of the fiber optic cable 58 that is to be stored in the accumulators 56 is a known quantity, and that quantity can be adjusted.

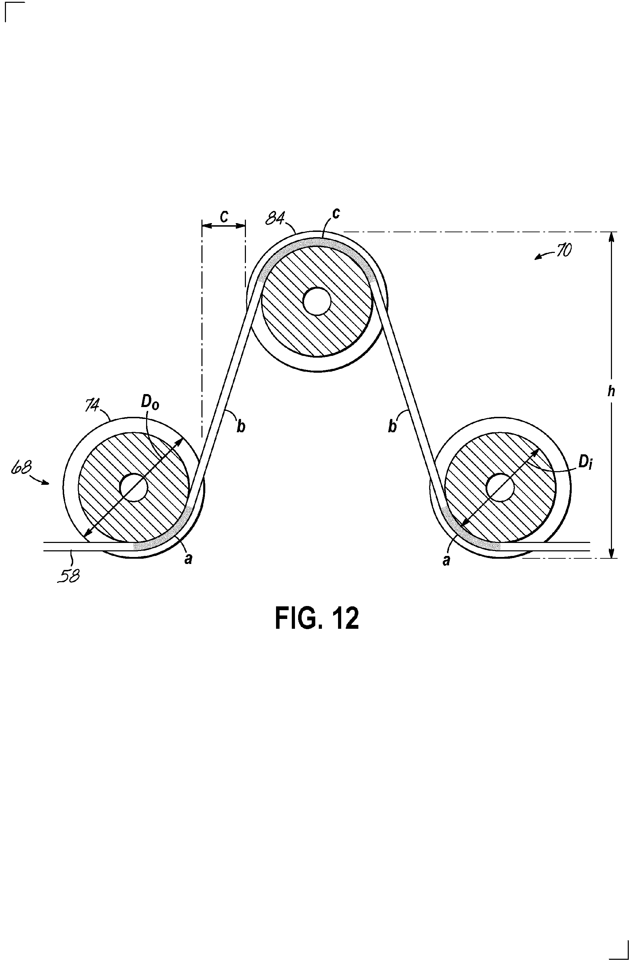

The length of the fiber optic cable 58 stored in an accumulator 56 is primarily determined by the size of the pulleys 74, 84, the spacing between adjacent pulleys 74, 84 on the first and second pulley arrays 68, 70 in the direction of the distribution axis 76, and the spacing between adjacent pulleys 74, 84 on the first and second pulley arrays 68, 70 in the direction of the translation axis 80. Fig. 12 is a schematic diagram of a model that illustrates a portion of the travel path of the fiber optic cable 58 through the pulleys 74, 84 of the first and second pulley arrays 68, 70, respectively. As noted in this figure, the travel path may be separated into sections a, b and c.

Assuming that the fiber optic cable 58 contacts the pulleys 74, 84 (which are all assumed to be of identical size) in quarter and half circles only and at the inner diameter $D_i$ of the pulleys 74, 84, one can approximate the length of the sections a, b and c of the fiber optic cable 58 in the accumulator 56. In this regard, if one designates the number of pulleys 74, 84 on the pulley array 68, 70 having the fewest number of pulleys as N, then one may calculate an approximate length L of the fiber optic cable 58 in the accumulator 56 using basic trigonometry. More particularly, this approximation may be given by:

$$L = 2N\sqrt{(h - D_o)^2 + (C + D_o - D_i)^2} + ND_i\pi, \qquad (1)$$

where $D_i$ is the inner diameter of the pulleys 74, 84, $D_o$ is the outer diameter of the pulleys 74, 84, C is the clearance between pulleys 74, 84, and h is the separation distance of the pulleys 74, 84 (outer diameter to outer diameter). As noted above, L is a known and selectable variable. Accordingly, the above equation may be solved for h, which corresponds to how far apart the first pulley array 68 and second pulley array 70 have to be separated in order to have the selected length L of the fiber optic cable 58 (and which is controllable). Solving equation (1) for h provides:

$$h = D_o + \sqrt{\left(\frac{L - ND_i\pi}{2N}\right)^2 - (C + D_o - D_i)^2} \qquad (2)$$

The parameters of the accumulator 56, including N, C, $D_i$, $D_o$ and L, may be input or programmed into controller 92. Thus, during the threading process of the accumulator(s) 56, the desired length of fiber optic cable 58 may be stored in the accumulators 56 by controlling the distance between the first and second pulley arrays 68, 70 along the translation axis 80 as dictated by equation (2).

As discussed above, the ability to operationally separate the unwinder 52 from the one or more accumulators 56 allows manufacturers greater flexibility in designing their manufacturing systems. For example, in some circumstances, the speed of the unwinder 52 may be greater than, and perhaps significantly greater than the speed of the winder 54. In this regard, imagine a scenario where the time to fill an accumulator 56 with the desired length of fiber optic cable 58 is T and the time to empty the accumulator 56 and form a coil 60 from the fiber optic cable 58 stored in accumulator 56 is nT, where n is an integer value, such as 2, 5 or 7 (i.e., the unwinder 52 is 2 times, 5 times, or 7 times faster, respectively, than the winder 54). In that case, then a manufacturing system may be designed to take advantage of that increased speed of the unwinder 52 relative to the winder 54 to increase the production of coils 60.

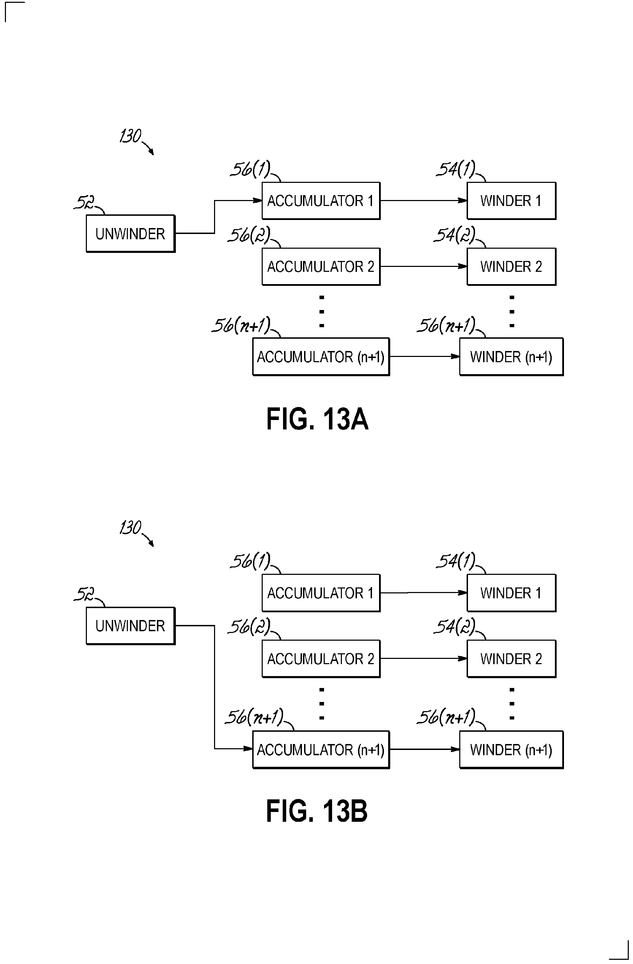

Figs. 13A and 13B illustrate another manufacturing system 130 in accordance with a further embodiment of the disclosure that takes advantage of the decoupling of the unwinder 52 and the plurality of accumulators 56, and an unwinder 52 having a speed greater than that of the winder 54. As illustrated in these figures, the manufacturing system 130 includes an unwinder 52, a plurality of winders 54, and a plurality of accumulators 56 generally disposed between the unwinder 52 and the plurality of winders 54. In this embodiment, the time to fill an accumulator 56 is n times faster than the time to make a coil 60. Thus, to maximize the production of coils 60, the manufacturing system 130 includes (n+1) accumulators 56 and (n+1) winders 54, but only one unwinder 52.

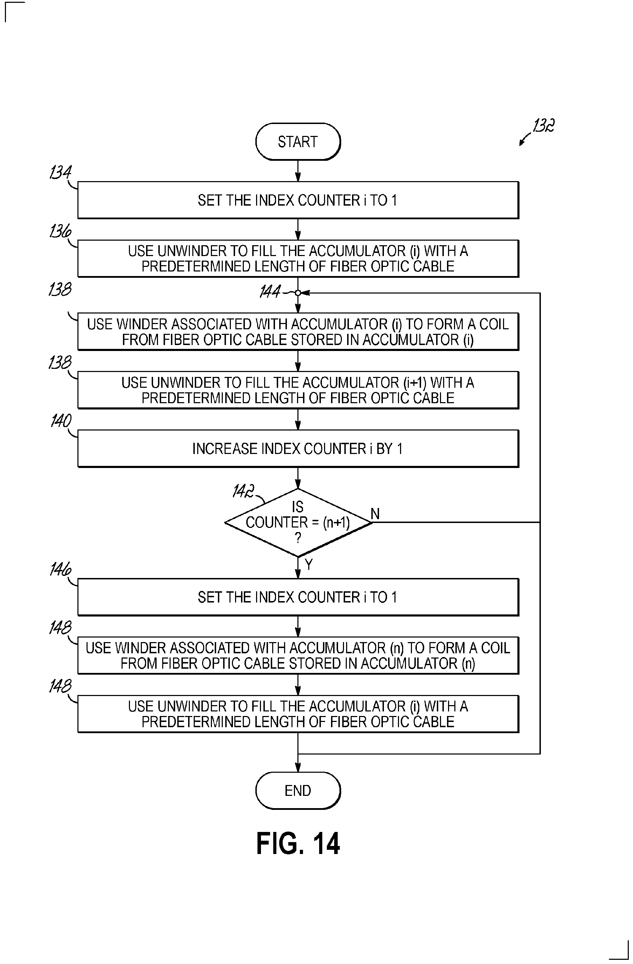

An exemplary method 132 of using the manufacturing system 130 to produce coils 60 is illustrated in Fig. 14. In the method 132 illustrated in Fig. 14, the cutting steps and coupling steps provided as separate steps in Fig. 11 have been incorporated into the use steps of the winder/unwinder for simplicity. In a first step 134, an index counter i may be set to 1. In a next step 136, the unwinder 52 may be used to fill the $i^{th}$ accumulator 56(i) with a predetermined length L of fiber optic cable 58. In a further step 138, and in substantially simultaneous fashion, the winder 54 associated with the $i^{th}$ accumulator 56 is used to form a coil 60 from the length of fiber optic cable 58 stored in the accumulator 56(i), and the unwinder 52 is used to fill the (i+1) accumulator 56 with a predetermined length of fiber optic cable 58.

In a next step 140, the index counter i may be increased by 1. The method 132 may then reach a decision block 142. At the decision block 142, the value of the index counter is checked to see if it has reached the value of (n+1). If the outcome is a no, then the method 132 returns to junction 144 and steps 138 and 140 are repeated. If the outcome of the decision block 142 is a yes, then in a next step 146, the index counter i is set to 1 again. In a next step 148, and in substantially simultaneous fashion, the winder 54 associated with the (n+1) accumulator 56 is used to form a coil 60 from the length of fiber optic cable 58 stored in the (n+1) accumulator 56, and the unwinder 52 is used to fill the $i^{th}$ accumulator 56 with a predetermined length of fiber optic cable 58.

The method 132 then returns to junction 144 and the manufacturing steps may be repeated so long as there is fiber optic cable 58 remaining on the spool 62 in the unwinder 52 to produce a coils 60. When the spool 62 runs out of fiber optic cable 58, a new spool may be operatively coupled to the unwinder 52 and the process continued for making additional coils 60.

The manufacturing system 130 described above may be advantageous for designing a manufacturing system that operates in a continuous or semi-continuous manner. For example, given the relationship between the speeds of the unwinder 52 and winders 54, the manufacturing system 130 may configured to produce a coil 60 every T seconds. Moreover, this "steady state" process may be achieved with only a single unwinder 52.

The manufacturing systems 96 and 130 are just two exemplary manufacturing systems that are possible due to the operational decoupling of the unwinder 52 from the accumulator 56. Aspects of the disclosure are not limited to the two arrangements illustrated in these manufacturing systems. It should be recognized that manufacturing systems with many different numbers, arrangements, etc. of unwinders, winders, and accumulators are possible to achieve the improved production of coils for use in jumper fiber optic cables. In accordance with aspects of the present disclosure, it is possible to use an unwinder with more than one accumulator and to have arrangements where the number of unwinders, winders, and accumulators are mismatched. For example, the number of unwinders 52 may be less than the number of accumulators 56 and less than or equal to the number of winders 54. Moreover, the number of winders 54 may be less than or equal to the number of accumulators 56. In various embodiments, the sum of the unwinders 52 and the winders 54 may be less than or equal to the number of accumulators 56 in the manufacturing system.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The present disclosure in its broader aspects is therefore not limited to the specific details, representative apparatus and methods and illustrative examples shown and described. Accordingly, departures may be made from such details without departing from the scope of the present disclosure.

**Claims**

1.  An accumulator for making fiber optic cables, comprising:

    a frame;
    a first pulley array mounted to the frame and including a first frame member and a first plurality of pulleys rotatably mounted to the first frame member along a first distribution axis, each of the first plurality of pulleys defining a first rotational axis; and
    a second pulley array mounted to the frame and including a second frame member and a second plurality of pulleys rotatably mounted to the second frame member along a second distribution axis, each of the second plurality of pulleys defining a second rotational axis,
    wherein the first pulley array and the second pulley array are movable relative to each other so as to be positionable on opposite sides of each other.

2.  The accumulator of claim 1, wherein the first distribution axis and the first rotational axis of each of the first plurality of pulleys are substantially perpendicular to each other, and wherein the second distribution axis and the second rotational axis of each of the second plurality of pulleys are substantially perpendicular to each other.

3. The accumulator of claim 1 or 2, wherein the first plurality of pulleys on the first pulley array and the second plurality of pulleys on the second pulley array lie substantially within a common plane.

4. The accumulator of claim 3, wherein the common plane in which the first plurality of pulleys and the second plurality of pulleys substantially lie is a substantially vertical plane.

5. The accumulator of claim 3 or 4, wherein the first plurality of pulleys is mounted to the first frame member in spaced relation along the first distribution axis to define a first gap between adjacent pulleys on the first frame member, wherein the second plurality of pulleys is mounted to the second frame member in spaced relation along the second distribution axis to define a second gap between adjacent pulleys on the second frame member, and wherein the first and second gaps are configured to allow the first plurality of pulleys and the second plurality of pulleys to pass in between each other.

6. The accumulator of any of the preceding claims, wherein the first pulley array is fixed to the frame and the second pulley array is movable relative to the first pulley array so as to be positionable on opposite sides of each other.

7. The accumulator of any of the preceding claims, wherein the first pulley array and the second pulley array are movable relative to each other along a translation axis so as to be positionable on opposite sides of each other.

8. The accumulator of claim 7, wherein the first distribution axis along which the first plurality of pulleys is distributed on the first frame member is substantially perpendicular to the translation axis, and wherein the second distribution axis along which the second plurality of pulleys is distributed on the second frame member is substantially perpendicular to the translation axis.

9. The accumulator of claim 7 or 8, wherein the translation axis along which the first pulley array and the second pulley array are relatively movable is in a substantially vertical direction.

10. The accumulator of any of claims 1-6, wherein the first pulley array and the second pulley array are movable relative to each other through rotation about a pivot axis so as to be positionable on opposite sides of each other.

11. The accumulator of claim 10, wherein the pivot axis is substantially parallel to the first rotational axis of each of the first plurality of pulleys on the first frame member, and wherein the pivot axis is substantially parallel to the second rotational axis of each of the second plurality of pulleys on the second frame member.

12. A manufacturing system for making a fiber optic cable, comprising:

an unwinder for holding a supply of fiber optic cable;
at least one winder for forming a plurality of coils from the supply of fiber optic cable associated with the unwinder; and
a plurality of accumulators each according to any of claims 1-11 disposed between the unwinder and the at least one winder,
wherein the unwinder is configured to operatively couple to each of the plurality of accumulators in the manufacturing system during operation.

13. The manufacturing system of claim 12, further comprising a cutter for severing the fiber optic cable between successive coils, wherein the cutter is positioned such that the fiber optic cable is severed at a location that is prior to the fiber optic cable engaging the first plurality of pulleys and the second plurality of pulleys in the accumulator.

14. The manufacturing system of claim 12 or 13, wherein the number of winders is less than or equal to the number of accumulators in the manufacturing system.

15. The manufacturing system of any of claims 12-14, wherein the sum of the number of winders and the number of unwinders is less than or equal to the number of accumulators in the manufacturing system.

16. A method for threading the accumulator according to any of claims 1-11 with fiber optic cable, comprising:

positioning the second pulley array on a first side of the first pulley array in a load position;

directing a length of fiber optic cable through the accumulator and between the first plurality of pulleys and the second plurality of pulleys on the first pulley array and the second pulley array, respectively, along a substantially straight travel path; and

moving the first pulley array and the second pulley array relative to each other so as to position the second pulley array on a second side of the first pulley array opposite to the first side in a threaded position,

wherein the relative movement of the first pulley array and the second pulley array causes the fiber optic cable to be threaded back and forth between the first plurality of pulleys and the second plurality of pulleys in a substantially serpentine travel path.

**FIG. 1**
PRIOR ART

EP 4 174 005 A1

**FIG. 2**
PRIOR ART

15

**FIG. 3B**
PRIOR ART

**FIG. 3A**
PRIOR ART

## FIG. 4
PRIOR ART

**FIG. 5**

FIG. 6A

FIG. 6B

**FIG. 7A**

**FIG. 7B**

**FIG. 7C**

EP 4 174 005 A1

FIG. 7D

**FIG. 7E**

EP 4 174 005 A1

FIG. 8A

**FIG. 8B**

EP 4 174 005 A1

EP 4 174 005 A1

**FIG. 8C**

**FIG. 8D**

FIG. 8E

EP 4 174 005 A1

**FIG. 9A**

**FIG. 9B**

EP 4 174 005 A1

**FIG. 9C**

_96_

_56a_

_52_

ACCUMULATOR 1

UNWINDER

_56b_

_54_

WINDER

ACCUMULATOR 2

## FIG. 10A

_96_

_56a_

_52_

ACCUMULATOR 1

UNWINDER

_56b_

_54_

WINDER

ACCUMULATOR 2

## FIG. 10B

START

*98*

*100* OPERATIVELY COUPLE THE UNWINDER TO THE FIRST ACCUMULATOR

*102* USE UNWINDER TO FILL THE FIRST ACCUMULATOR WITH A PREDETERMINED LENGTH OF FIBER OPTIC CABLE

*104* CUT THE FIBER OPTION CABLE UPSTREAM OF THE FIRST ACCUMULATOR

*106* OPERATIVELY COUPLE THE UNWINDER TO THE SECOND ACCUMULATOR

*108* OPERATIVELY COUPLE THE WINDER TO THE FIRST ACCUMULATOR

*110* USE WINDER TO FORM A COIL FROM FIBER OPTIC CABLE STORED IN FIRST ACCUMULATOR

*112* USE UNWINDER TO FILL THE SECOND ACCUMULATOR WITH A PREDETERMINED LENGTH OF FIBER OPTIC CABLE

*114* CUT THE FIBER OPTION CABLE UPSTREAM OF THE SECOND ACCUMULATOR

*116* OPERATIVELY COUPLE THE UNWINDER TO THE FIRST ACCUMULATOR

*118* OPERATIVELY COUPLE THE WINDER TO THE SECOND ACCUMULATOR

*120* USE WINDER TO FORM A COIL FROM FIBER OPTIC CABLE STORED IN SECOND ACCUMULATOR

*122* USE UNWINDER TO FILL THE FIRST ACCUMULATOR WITH A PREDETERMINED LENGTH OF FIBER OPTIC CABLE

*124* CUT THE FIBER OPTION CABLE UPSTREAM OF THE FIRST ACCUMULATOR

END

# FIG. 11

**FIG. 12**

*130*

**52** UNWINDER

**56(1)** ACCUMULATOR 1 → **54(1)** WINDER 1

**56(2)** ACCUMULATOR 2 → **54(2)** WINDER 2

**56(n+1)** ACCUMULATOR (n+1) → **56(n+1)** WINDER (n+1)

## FIG. 13A

*130*

**52** UNWINDER

**56(1)** ACCUMULATOR 1 → **54(1)** WINDER 1

**56(2)** ACCUMULATOR 2 → **54(2)** WINDER 2

**56(n+1)** ACCUMULATOR (n+1) → **56(n+1)** WINDER (n+1)

## FIG. 13B

FIG. 14

Europäisches
Patentamt

European
Patent Office

Office européen
des brevets

# EUROPEAN SEARCH REPORT

**Application Number**

EP 22 20 3920

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2000 109269 A (FURUKAWA ELECTRIC CO LTD) 18 April 2000 (2000-04-18) * paragraph [0020] - paragraph [0051]; figures 1-9 * | 1-9,16 | INV. B65H51/20 |
| A | JP 2000 343165 A (SUMITOMO ELECTRIC INDUSTRIES) 12 December 2000 (2000-12-12) * paragraph [0013] - paragraph [0017]; figures 1-3 * | 1-16 | |
| A | EP 0 622 323 A1 (WINDINGS INC [US]) 2 November 1994 (1994-11-02) <br><br> * column 4, line 53 - column 7, line 7; figure 6 * <br> * figures 9A, 9B * | 1,3-6,8, 9,12,14, 15 | |

**TECHNICAL FIELDS SEARCHED (IPC)**

B65H
H01B
G02B

The present search report has been drawn up for all claims

| Place of search | Date of completion of the search | Examiner |
|---|---|---|
| Berlin | 2 March 2023 | A. Jacobs |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 20 3920

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2023

| Patent document cited in search report | | Publication date | Patent family member(s) | | Publication date |
|---|---|---|---|---|---|
| JP 2000109269 | A | 18-04-2000 | NONE | | |
| JP 2000343165 | A | 12-12-2000 | NONE | | |
| EP 0622323 | A1 | 02-11-1994 | AU | 657611 B2 | 16-03-1995 |
| | | | CA | 2093183 A1 | 15-10-1994 |
| | | | EP | 0622323 A1 | 02-11-1994 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63273265